# EUROPEAN PATENT APPLICATION

(11) **EP 4 797 207 A1**
(43) Date of publication of application: **26.08.2026**
(21) Application number: 25159762.1
(22) Date of filing: 24.02.2025
(51) Int. Cl.: G06T 7/62, G06T 7/41

(54) **CHARACTERIZING MACROTEXTURES OF GROUND SURFACES**

(71) Applicant: Leica Geosystems AG, 9435 Heerbrugg (CH)
(72) Inventor: AMMANN, Manuela, 4132 Muttenz (CH); BLEISCH, Susanne, 4132 Muttenz (CH); HOLLENSTEIN, Daria, 4132 Muttenz (CH)
(74) Representative: Kaminski Harmann

(57) **Abstract**

The invention pertains to a computer-implemented method (100) for characterizing a macrotexture of a ground surface, the method comprising receiving (110) 3D point cloud data of a scene, the scene comprising one or more ground surfaces, the 3D point cloud data comprising a plurality of ground points related to the one or more ground surfaces, selecting (130) a sampling unit of one of the ground surfaces, performing plane fitting (140) for fitting one or more planes, each plane representing a portion of the sampling unit, wherein the plane fitting is based on ground points related to the portion represented by the respective plane, calculating (150) a set of roughness indices, each roughness index characterizing the macrotexture of the sampling unit, wherein the calculation of each roughness index is based on distance values of ground points related to the respective portions, the distance values indicating a distance of the respective ground point relative to the respective plane, generating (160) output based on the set of roughness indices, and providing (170) a graphical representation of the output in a graphical user interface.

## Description

The present invention pertains to a method for characterizing macrotextures of pavements and other ground surfaces. Ground surface macrotexture- as defined by the Permanent International Association of Road Congress (PIARC) - is in the range of wavelengths from 0.5 to 50 mm and characterizes a surface roughness that is related to rolling resistance and vibrations that may induce discomfort and thus effect ride quality. These functional properties are of major interest for barrier-free routing, for instance for wheelchair travellers or pedestrians with strollers.

Pavement surface macrotexture measurement and characterization is of great interest in planning and management of road network and traffic infrastructures, because surface macrotexture relates to the pavement's functional properties such as loss of energy through tire-rolling resistance, ride quality (i.e. vertical accelerations causing vibrational discomfort), skid resistance, noise pollution, or surface water drainage. The properties of different pavements with respect to these aspects are not easily measurable over large areas in situ. Methods for measurements of rolling resistance in situ are, e.g., coast-down tests, driving torque measurements, instantaneous fuel consumption measurements, accelerometers on vehicle suspensions, or involve dedicated measuring equipment mounted on trailers. Since rolling resistance relates to not only surface roughness but also tire material, all measurements must be carried out for different tire-pavement configurations. As an alternative to in-situ measurements, rolling resistance is assessed in laboratory conditions, often according to ISO standards which require the use of pavement surface replicas mounted on steel drums. The manufacturing of curved pavement replicas, however, is time consuming. But even laboratory methods adapted to work with flat pavement specimens are only capable of covering small areas. Also, to analyse pavements' behaviour under different stages of wear, the replicas have to be manipulated accordingly. Laboratory measurements are not comparable to in-situ evaluations of larger pavement areas, which require different approaches. Therefore, the approximation of functional properties via pavement surface macrotexture characterization with the help of contactless measurement technologies which allow to capture large areas efficiently, is of great interest.

The relation between pavement surface macrotexture and rolling resistance or other functional properties is a dynamic field of research. It involves multiple interdependent aspects:
- the capturing of surfaces of interest in the desired resolution, accuracy and completeness within reasonable time,
- the definition of quantitative surface macrotexture characteristics (indices), which relate to the targeted functional property, and
- a data filtering process that ensures the computation of reliable index-values from the raw data of the chosen measurement method.

It is indispensable to adapt data filtering and index-computation to the chosen measurement method, because different technologies produce data with different characteristics and limitations, e.g. in terms of noise, resolution, and completeness, which must all be dealt with to draw inferences at the level of pavement macro-texture.

Several methods have been developed to characterize pavement types in the context of barrier-free routing. Some attempts were made to classify road surface types using smartphone sensor-based vibration measurements which are collected by wheelchair users (e.g., R. Banerjee et al., "Surface Recognition from Wheelchair-induced Noisy Vibration Data: A Tale of Many Cities", 2022 18th International Conference on Mobility, Sensing and Networking (MSN), p. 619-626, IEEE Computer Society). However, the variance in the signals from different wheelchair models is a challenge with these approaches. Pavement material can also be inferred from street view imagery incorporated with **LIDAR** depth information using deep learning (e.g., G. Weld et al., "Deep learning for automatically detecting sidewalk accessibility problems using streetscape imagery", Proceedings of the 21st International ACM SIGACCESS Conference on Computers and Accessibility, p. 196-209).

Measures to characterize pavement surface macrotexture can be split into three groups: geometric indicators, spectral indicators (e.g. discrete Fourier transform, wavelet transform) and fractal/multi-fractal indicators. Traditionally, geometric indicators were generated from 2D-surface profiles: ISO standards describe the measuring of 2D-profiles with stylus instruments (ISO 3274:1996), the subsequent data filtering to extract surface deviations in the wavelength-range of macrotexture (ISO 13565-1: 1996), and the computation of various amplitude-related and material ratio curve-based roughness indices (ISO 21920-2:2021). These procedures thus only cover a 2D-profile of the 3D-structure.

The wide availability of contact-less 3D-capturing technologies, such as various laser scanning technologies, structured light scanning and photogrammetry, led to the development of numerous 3D indicators as well as procedures to compute well-established 2D indices from 3D data. However, procedures to generate 3D-surface roughness indicators are not standardized to the same degree as 2D indices. This is due to the multitude of 3D-capturing methods, each of which requiring a specific data filtering process. ISO standard 16610 describes various data filtering approaches. The choice of a suitable filter with respect to the raw data, however, is with the user. ISO standard 25178-2:2021 defines the computation of 3D-roughness indices: Amplitude-related indices, indices based on the areal material ratio curve, spatial parameters, fractal parameters and shape-based-parameters.

Frequently used roughness indices in studies on rolling resistance or ride quality include *Mean Profile Depth* (MPD) and *Mean Texture Depth* (MTD). These are the most widely applied indices to make inferences on rolling resistance. MPD traditionally is generated from 2D-profile measurements, whereas MTD traditionally is determined with the sand patch method. With this method, a known quantity of sand is spread over the pavement surface to cover the shape of a circle. MTD then is the ratio of sand volume to circle size. Because of their relevance, attempts were made to automate computation of MPD and MTD from digital 3D-data. Simulated Mean Texture Depth (SMTD) was proposed as a very simple digital alternative to MTD. Further, more computationally expensive methods have been put forward to most exactly reproduce MTD from meshed digital surface models. International Roughness Index (IRI), on the other hand, is a frequently applied road profile-oriented index developed to assess ride quality. Its calculation involves a mathematical quarter-car model to simulate vertical motion. The length of segments evaluated varies and influences the corresponding results.

It is known to use more than one measure to characterize and compare different pavement surface macro-textures with respect to their functional properties. It is also known to involve automated computation of a set of descriptive and discriminative surface roughness indices from digital 3D data (e.g., Edmondson et al., "Improved non-contact 3D field and processing techniques to achieve macrotexture characterisation of pavements", Construction and Building Materials, 227.) Measures on the (areal) material distribution are targeted at characterizing surfaces with respect to different vertical sections, i.e. peak area, core area and valley area, to characterize macrotexture particularly in relation to skid resistance.

Measurement methods applied to capture 3D data for surface macrotexture characterization can be divided in two groups: laboratory measurements and in-situ measurements. In the laboratory, the measured or digitized specimen are usually restricted in size (generally below 500×500 mm, but usually around 100×100 mm), and the targeted resolution and accuracy is high (below 1mm). Apart from traditional non-digital measurement methods, which relate to specific roughness measures such as the sand patch method for measuring MTD, a variety of contact-less measurement methods and devices is applied in laboratory measurements: Handheld or desktop laser scanning with multi-laser triangulation (MLT), 3D laser profilometers, photogrammetric approaches, structured light scanning or computer tomography are applied. In-situ measurements on the other hand, require the coverage of much larger areas and data sets to be processed and analysed. Mobile laser scanning profilometers produce 2D profiles or 3D swaths with limited lateral coverage (e.g. 300 mm) with a horizontal resolution of 1 mm (or above) and are used to capture data on large street network parts at traffic speed. Additionally, there are dedicated mobile measurement systems based on 2D- and 3D-laser and 3D-imaging technology which cover entire lanes and capture 3D-data in 1 mm horizontal and 0.3 mm vertical resolution at highway driving speeds. Photogrammetric measurement systems are also developed specifically to be applied to in-situ measurements of pavement roughness. The application of nadir images from low-cost mobile phone cameras requires a stable setup from two distances (e.g., 300 and 500 mm) to cover a limited area < 500×500 mm of the ground.

The use of of-the-shelf stationary terrestrial laser scanners (TLS), which allow for efficient 3D recording of large areas in situ, possess a number of specific challenges regarding the generation of reliable measurements of pavement surface macrotexture to assess roughness of different pavement types. Point clouds from stationary TLS come with a product-specific range noise and 3D-point accuracy. For instance, the TLS Leica Geosystems RTC360 has a range noise of ~ 0.4 mm at 10 m and a 3D-point accuracy of ~1.9 mm at 10 m. The point density and laser beam-surface intersection angle decrease with increasing distance from the scanning setup. This creates point clouds with inhomogeneous quality and coverage. Combining point clouds from different setups creates additional irregularities. All this affects the resulting geometry and needs consideration for consistent and reliable characterization of pavement surface roughness. Also, point-cloud accuracy and resolution of the RTC360 or similar models are below those of other measurement technologies which are applied in the field of pavement macrotexture characterization. While the exploitation of data from TLS is desirable to assess large areas of pavement surfaces in situ, evidently, the exploitation of this data requires dedicated filtering and analysis protocols to produce reliable inferences on pavement surface roughness.

It is therefore an object of the present invention to provide a method that allows assessing large areas of pavement surfaces in situ with respect to their macrotexture using 3D data from a TLS.

It is a further object to provide such a method that allows providing sufficient surface-roughness information for a barrier-free routing on these large areas of pavement surfaces.

At least one of these objects is achieved by the method according to claim 1, and/or the dependent claims of the present invention.

The proposed solution includes a protocol for processing and filtering 3D point cloud data from large-scale stationary TLS (like the Leica Geosystems RTC360 or a stationary laser scanner having similar specifications) and defines the computation of a set of surface macrotexture indices which are targeted at the characterization of pavement surfaces with a view to accessibility and barrier-free routing. The combination of indices is aimed at describing general pavement surface roughness, as well as depth and ratio of joints and the roughness of the main contact area of the pavement. These are the factors considered relevant to assess the suitability of different pavements for persons with reduced mobility relying on walking aids. The related functional properties of pavements are rolling resistance and ride quality. The set of roughness indices is composed of adaptations of well-known descriptors and of newly proposed indices which are designed specifically for the targeted application purpose, and which equally consider the characteristics of the point cloud input. In combination, these parameters allow the ranking and characterization of a wide variety of pavements, such as asphalt, concrete and stone slabs, and flat cut, quarried and rounded cobblestones with and without solid joints.

The presented method is targeted at information which is beyond the specified accuracy of the scanning technology used. Results from a study on data from ca. 100 setups covering 11 different pavements indicate however, that on the level of pavement type average values meaningful results can still be achieved.

The aim is to compute a set of geometric indices in a systematic way, based upon which relevant surface characteristics are directly inferred without the need for a classification according to known types. This offers the advantage of accommodating previously unknown types, different wear stages and irregular structures such as manhole coverings. The present method has the potential to lead to fine-grained roughness rankings within and across different surface types.

A first aspect of the invention pertains to a computer-implemented method for characterizing a macrotexture of a ground surface. The method comprises
- receiving 3D point cloud data of a scene, the scene comprising one or more ground surfaces, the 3D point cloud data comprising a plurality of ground points related to the one or more ground surfaces;
- selecting a sampling unit of one of the ground surfaces;
- performing plane fitting for fitting one or more planes, each plane representing a portion of the sampling unit, wherein the plane fitting is based on ground points related to the portion represented by the respective plane;
- calculating a set of roughness indices, each roughness index characterizing the macrotexture of the sampling unit, wherein the calculation of each roughness index is based on distance values of ground points related to the respective portions, the distance values indicating a distance of the respective ground point relative to the respective plane;
- generating output based on the set of roughness indices; and
- providing a graphical representation of the output in a graphical user interface (GUI).

According to some embodiments of the method, the set of roughness indices comprises at least three, e.g. at least five, roughness indices, and generating the output comprises combining the values of each calculated roughness index. For instance, the output can be provided as a compound index or a two-dimensional plot. Combining the values of each roughness index may comprise range-normalizing the values for each roughness index and summing the range-normalized values. Optionally, combining the values also comprises dividing the sum by the number of roughness indices. Generating the output may comprises applying metric Multi-Dimension Scaling, wherein providing the output comprises plotting the metric Multi-Dimension Scaling in two dimensions.

According to some embodiments of the method, calculating the set of roughness indices is based only on distance values of ground points that have a distance from the fitted plane that is within the macrotexture realm - for instance, a maximum distance of 25 millimetres.

According to some embodiments, the method comprises processing the 3D point cloud data before performing the plane fitting. Said processing may comprise excluding points of the 3D point cloud data that lie beyond a predefined range (e.g., 10 metres) from a scanning device recording the respective points of the 3D point cloud data. Said processing may also comprise resampling (e.g., to 10 mm average point distance) the ground points to reduce influence of outliers, measurement errors and/or noise.

According to some embodiments of the method, the set of roughness indices comprises a surface median roughness (Rₘ), Rₘ being calculated as the median absolute deviation from the fitted plane.

According to some embodiments of the method, the set of roughness indices comprises a simulated median texture depth (SMdTD), SMdTD being the median of deviations from the 95^{th} percentile of the distance values.

According to some embodiments of the method, the set of roughness indices comprises a median joint depth (Jₘ), Jₘ being calculated as the median of the distance values negatively deviating more than a first predefined distance from the fitted plane.

According to some embodiments of the method, the set of roughness indices comprises a joint-surface ratio (Jᵣ), Jᵣ being the proportion of ground points more than a second predefined distance below the fitted plane.

According to some embodiments of the method, the set of roughness indices comprises a contact-area roughness (R₀), wherein the method comprises sorting the distance values into a plurality of bins, shifting the distance values by subtraction of the mean of the most frequent bin of the plurality of bins, and fitting a new plane using surface ground points having a shifted distance larger than a third predefined distance. The remaining points may be discarded. R₀ is the proportion of ground points that are not more than a fourth predefined distance above or below the new plane.

According to some embodiments, said first, second, third and/or fourth predefined distances are selected based on properties, such as an accuracy, of the 3D point cloud data or of a device capturing the 3D point cloud data. For instance, each predefined distance may be in the range of 0.5 to 2.5 mm, or in the range of 0.75 to 1.25 mm. Optionally, at least a subset (e.g., all) of the first, second, third and fourth predefined distances may have the same value or basically the same value, e.g., about 1 mm.

According to some embodiments of the method, the set of roughness indices comprises at least three, in particular all, of:
- the surface median roughness (Rₘ);
- the simulated median texture depth (SMdTD);
- the median joint depth (Jₘ);
- the joint-surface ratio (Jᵣ); and
- the contact-area roughness (R₀).

According to some embodiments of the method, a plurality of sampling units of at least one of the ground surfaces are selected, the plane fitting is performed for fitting a plurality of planes and each of the selected sampling units, each plane representing a portion of the respective sampling unit, a set of roughness indices is calculated for each of the selected sampling units, and output is generated for each of the selected sampling units. The graphical representation of the output optionally may then be provided in the GUI assigned to a graphical representation of the respective sampling unit.

According to some embodiments of the method, the distance values indicate a vertical distance of the respective ground point relative to the respective plane, especially if the plane is horizontal or basically horizontal. Alternatively, the distance values may indicate a distance of the respective ground point to the respective plane along an axis that is orthogonal to that plane.

According to some embodiments of the method, performing the plane fitting comprises using least-squares method.

A second aspect of the invention pertains to a computer program product comprising program code having computer-executable instructions for performing the method according to the first aspect of the invention.

The invention in the following will be described in detail by referring to exemplary embodiments that are accompanied by figures, in which:
- Fig. 1: shows a flow chart illustrating an exemplary embodiment of a computer-implemented method for characterizing a macrotexture of a ground surface according to the invention;
- Fig. 2: illustrates steps of a processing of 3D point cloud data according to exemplary embodiments of the method;
- Figs. 3a-e: illustrate the calculation of five different roughness parameters based on the processed 3D point cloud data;
- Fig. 4: shows an additive score from range-normalized values of the five parameters as a first exemplary output of an exemplary embodiment of the method; and
- Fig. 5: shows the result of metric Multi-dimensional Scaling (MDS) on vectors containing the range-normalized values of the five parameters as a second exemplary output of an exemplary embodiment of the method.

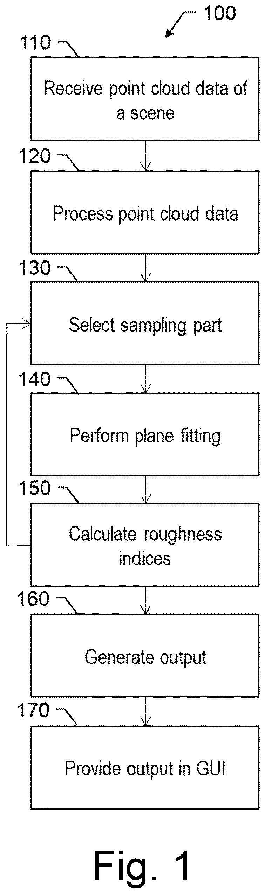

Figure 1 shows a flow chart illustrating an exemplary embodiment of a computer-implemented method 100 for characterizing a macrotexture of a ground surface according to the invention. The illustrated method begins with receiving 110 scene data. The scene data comprises 3D point cloud data of a scene which comprises at least one ground surface. The 3D point cloud data comprises a plurality of ground points related to the one or more ground surfaces. Receiving 110 the scene data may comprise capturing the scene data using a suitable scanning device such as a laser scanner or similar reality capture device, particularly terrestrial laser scanners (TLS). Alternatively, the data may be received from a data storage. The 3D point cloud data need not be generated with the purpose of scanning the ground. Instead, the 3D point cloud data may also be that of façade of a building or of a street of houses, wherein ground surfaces adjacent to the façades are captured merely as a byproduct.

For instance, the scene data may be captured using a Leica RTC360 terrestrial laser scanner. The range noise of the RTC360 is specified at 0.4 mm at 10 m, while the 3D point accuracy is specified with 1.9 mm at 10 m. To cover the scene in the desired resolution of at least 1 point per cm², multiple setups at a maximum distance of 8 m are scanned with a 6 mm point distance at 10 m. The individual scans are registered automatically using the Visual Inertial System (VIS technology) of the RTC360. The final registration to combine the individual laser scans is calculated in the software Leica Cyclone REGISTER 360. A high-accuracy registration (~ 4 mm) of scans is required to proceed with data analysis.

Next, (if necessary) the 3D point cloud data may be processed 120 to improve the final result. In particular, this processing 120 may comprise excluding points of the 3D point cloud data that lie beyond a predefined range from a scanning device that has recorded the respective points of the 3D point cloud data. For instance, this predefined range may be 10 m. The processing 120 may also include resampling the ground points to reduce the influence of outliers, measurement errors and/or noise. For instance, the ground points may be resampled to a 10 mm average point distance.

Subsequently, at least one sampling unit is selected 130 from the ground surface, and plane fitting 140 is performed for fitting one or more planes, each plane representing a portion of the sampling unit, wherein the plane fitting 140 is based on ground points related to the portion represented by the respective plane. For instance, the plane fitting 140 may comprise using least-squares method.

For example, each sampling unit may comprise (or represent) a square of 1×1 m of the ground surface. Each of the sampling units may then be divided into sections of, e.g., 100×100 mm, wherein the sections serve as the portions of the sampling unit which the fitted planes represent.

Then, a set of roughness indices is calculated 150, wherein each roughness index of the set characterizes the macrotexture of the sampling unit. The set of roughness indices that are calculated comprises at least a subset - in particular all - of the following:
- a surface median roughness (Rₘ);
- a simulated median texture depth (SMdTD);
- a median joint depth (Jₘ);
- a joint-surface ratio (Jᵣ); and
- a contact-area roughness (R₀);

For instance, the set of roughness indices may comprise at least three, particularly all five of the above roughness indices. Also, the set additionally may comprise further indices.

The calculation 150 of each roughness index is based on distance values of ground points related to the respective portions, the distance values indicating a distance of the respective ground point relative to the respective plane. The distance values can indicate a vertical distance of the respective ground point relative to the respective plane, particularly if the plane is horizontal or basically horizontal. Alternatively, the distance values can indicate a distance of the respective ground point to the respective plane along an axis that is orthogonal to the plane. In order to ensure that a respective roughness index only characterizes the macrotexture, calculating 150 the set of roughness indices preferably is based only on distance values of those ground points that have a distance from the plane that is within the macrotexture realm, i.e., a distance of 50 millimetres or less. For instance, a maximum distance of 25 millimetres may be applied.

The five roughness indices mentioned above are calculated 150 as follows: The surface median roughness (Rₘ) is calculated as the median absolute deviation from the fitted plane. The simulated median texture depth (SMdTD) is the median of deviations from the 95th percentile of the distance values. The median joint depth (Jₘ) is calculated 150 as the median of those distance values that are more than a predefined distance below the fitted plane. The joint-surface ratio (Jᵣ) is the proportion of those ground points that are more than a predefined distance below the fitted plane. The contact-area roughness (R₀) is the proportion of those ground points that meet a predefined criterion regarding a distance from a new plane, said new plane being created by sorting the distance values into a plurality of bins, shifting the distance values by subtraction of the mean of the most frequent bin of the plurality of bins, and fitting the new plane using surface ground points having a shifted distance value above a predefined value. For instance, said predefined criterion may be being more or less than a predefined distance away from the new plane.

The value of the predefined distance for calculating Jₘ, J_{R} and R₀ may be selected based on an accuracy or other properties of the 3D point cloud data or of the device that has captured the 3D point cloud data. Experiments have shown that for the purpose of macrotexture characterization in many cases (e.g., when using the above-mentioned setup with a Leica RTC360 TLS), the predefined distance is 1 mm or about 1 mm.

In step 130, a plurality of sampling units may be selected. In this case, the steps of plane fitting 140 and calculating 150 the roughness indices can be repeated for each of the plurality of sampling units, so that a plurality of sets of roughness indices are generated.

Based on the calculated set or sets of roughness indices an output is generated 160, which may be provided 170 as a graphical representation in a graphical user interface (GUI).

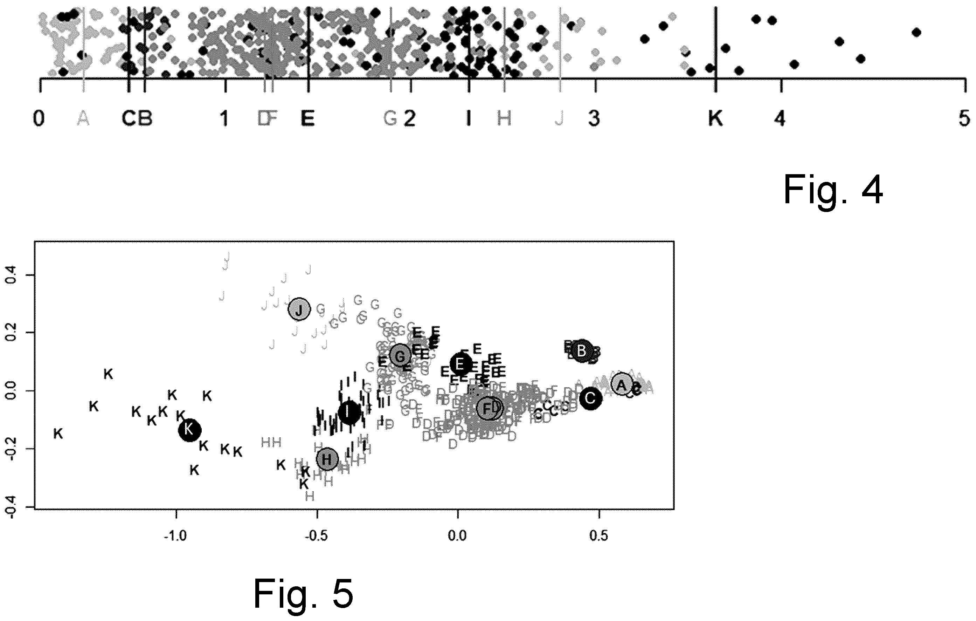

Generating 160 the output may comprise combining all the values of the calculated roughness indices - for instance by range-normalizing the values for each roughness index, summing the range-normalized values, and optionally dividing the sum by the number of roughness indices. The output might then be provided 170 as a compound index or as a plot. Also, generating 160 the output may comprise applying metric Multi-Dimension Scaling, and providing 170 the output may comprise a 2D plotting of the metric Multi-Dimension Scaling. Exemplary outputs are described with respect to Figures 4 and 5 below.

If a plurality of sampling units have been selected, output may be generated 160 for each of the selected sampling units separately. The graphical representation of the separate outputs may then be provided 170 in the GUI assigned to a graphical representation of the respective sampling unit.

To further improve the results, optionally, an absolute reference for scoring and metric Multi-dimensional Scaling (MDS) may be created - e.g. via covering additional pavement types. Also, the results could be compared with a reference created by a laser scanner having a higher accuracy (e.g., a Leica Geosystems ScanStation P40). The results may also be tested or validated using synthetic data.

Using the provided output, a user may then determine surface roughness of the investigated ground samples and, based thereon, deduce surface qualities with respect to functional properties, such as rolling resistance and vibrations. These properties may then be used for barrier-free routing, e.g., for wheelchair travellers.

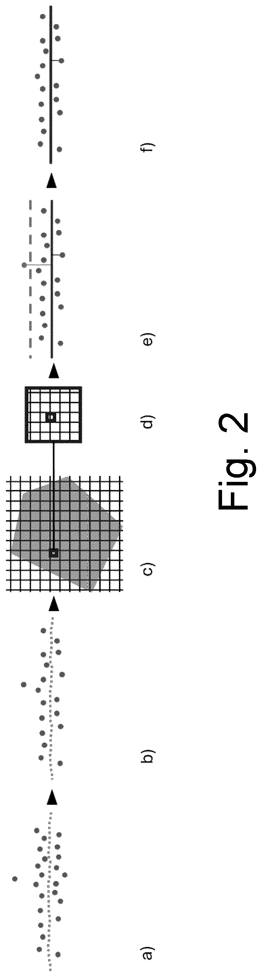

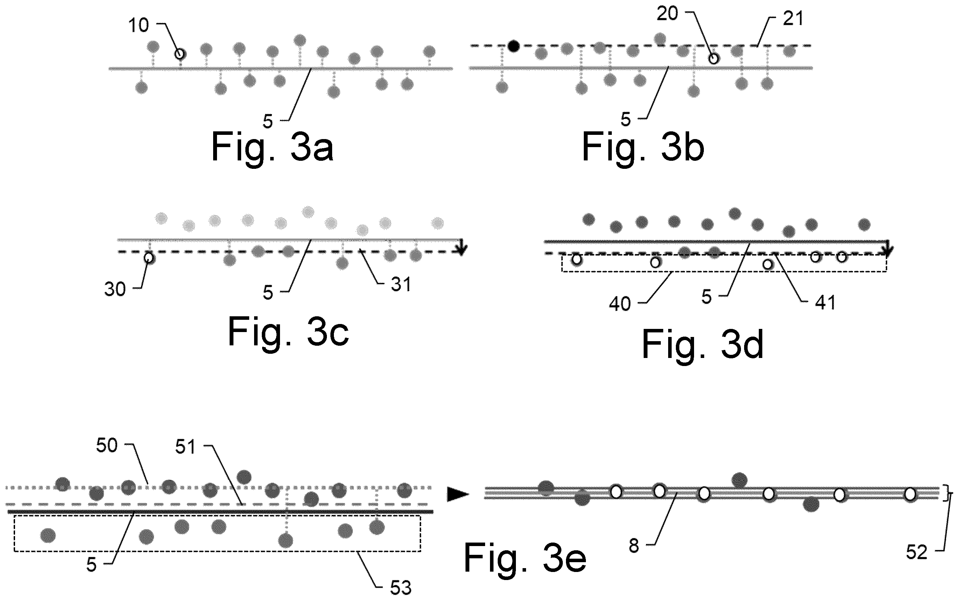

Figure 2 illustrates steps of a processing of the 3D point cloud data, starting on the left with a raw point cloud 1, followed by the resampled point cloud 2. The resampled point cloud is sectioned into a plurality of sampling units 3 of, e.g., 1×1 m. Each of the sampling units is divided into sections 4 of 100×100 mm. Then, a plane 5 is fitted to a point cloud section and the points' height deviations are calculated, wherein features outside the desired texture range 6 are discarded. On the right, all remaining points 7 in the point cloud sections of the 1×1 m sampling unit are shown. These remaining points will be used for parameter calculation and for schematic calculation of some of the roughness parameters as illustrated in Figures 3a-e.

The general procedure of parameter calculation can be described as follows: The ground point cloud 1 is restricted to points lying within a 10 m range from their respective recording setup. The ground points are resampled (e.g., in Leica Cyclone 3DR) to reduce influence of outliers, measurement errors and noise. If the point cloud has been captured as specified above using a RTC360 TLS and a 6 mm point distance at 10 m, a resampling to 10 mm average point distance is required for an evenly spaced point cloud 2. Then, planes 5 are fitted to point cloud sections 4 of 100x100 mm, e.g., using the least-squares method, and each point's vertical deviation from the plane 5 is determined. The point cloud section size of 100×100 mm is chosen to generate point amplitudes at spatial frequencies that are relevant to pavement surface macro-texture. After plane fitting, points outside the desired texture range 6, e.g. with deviations larger 25 mm, are filtered to restrict the analysis to features in the macro-texture realm. Up to this step, data from multiple setups are processed separately to prevent the introduction of artefacts from co-registration. This is a specific requirement when processing data from stationary TLS. Then, parameter values are calculated for every 1×1 m sampling unit 3 based on the remaining points' height deviation values.

Figures 3a to 3e illustrate the calculation of five different roughness parameters that can be used in the context of a method according to the invention.

Figure 3a illustrates the *Surface Median Roughness* (Rₘ). This roughness parameter is an adaption of the parameter *Surface Average Roughness* as calculated in P. Santos, E. Júlio, "A state-of-the-art review on roughness quantification methods for concrete surfaces", Construction and Building Materials 38 (2013), p. 912-923. Whereas the *Surface Average Roughness* is the mean absolute deviation from the fitted plane 5 considering all points in the sampling unit, for Rₘ, instead of the mean, the median 10 is calculated to improve parameter robustness with respect to varying distance from laser scanning setups and outlier influence. As an example: While for asphalt pavement Rₘ is below 0.5 mm, it is around 1.0 mm for different types of square cobble stone pavements with solid joints.

Figure 3b illustrates the *Simulated Median Texture Depth* (SMdTD). This roughness parameter is an adaption of the *Simulated Mean Texture Depth* (SMTD) calculated as in L. Li, K. Wang, Q. Li, "Geometric texture indicators for safety on AC pavements with 1 mm 3D laser texture data", International Journal of Pavement Research and Technology 9 (2016), p. 49-62. While SMTD, using all points in the sampling unit, is the mean of deviations from the point with the largest positive deviation from the plane 5, SMdTD is the median 20 of deviations from the 95^{th} percentile of the point heights (dashed line 21). These adaptions improve parameter robustness with respect to varying distance from the laser scanning setups and outlier influence. As an example: While for asphalt pavement SMdTD is below 1.0 mm, it is around 2.0 mm to 3.0 mm for different types of square cobble stone pavements with solid joints.

Figure 3c illustrates the *median joint depth* (Jₘ). This roughness parameter is calculated as the median 30 of the values negatively deviating more than a predefined distance 31 (e.g., more than -1 mm) from the fitted plane 5. For regularly structured surface types, this parameter may reflect joint depth. To facilitate comparison of Jₘ with other parameter values, the absolute value of the median 30 is returned, such that a high Jₘ indicates more pronounced joints. As an example: While for asphalt pavement Jₘ is between 1.0 mm and 1.5 mm, it is around 1.5 mm to 2.3 mm for different types of square cobble stone pavements with solid joints.

Figure 3d illustrates the *joint-surface-ratio* (Jᵣ). This is the proportion of points (indicated by box 40) more than a predefined distance 41 below the fitted plane 5 (e.g., more than 1 mm). As an example: While for asphalt pavement Jᵣ is below 0.1, it is between 0.2 and 0.3 for different types of square cobble stone pavements with solid joints.

Figure 3e illustrates the calculation of a fifth roughness parameter *roughness of the contact area* (R₀). The calculation repeats the steps of the processing shown in Figure 2 until the fitting of the plane 5. After the plane fitting, the distance values are sorted into a plurality of bins - e.g., 1 mm bins. The resulting deviations from the plane 5 are shifted by subtraction of the mean 50 of the most frequent bin in the values. All points with values larger than a predefined distance 51 after the shift, e.g., larger than -1 mm, are input into a new plane fitting process at the level of the 100×100 mm point cloud sections. The remaining points (box 52) are discarded. R₀ then is the proportion of points inside the 1×1 m sampling unit having resulting deviations from the new plane 8 which lie withing a certain range 53. For instance, this range 53 can have a predefined value of ±1 mm, so that R₀ is the proportion of resulting deviations from the new plane 8 either equal to or larger than 1 mm or equal to or smaller than -1 mm. As an example: While for asphalt pavement R₀ is below 0.1, it is around 0.3 to 0.4 for square cobble stones with rugged faces in a pavement with solid joints.

Jₘ, Jᵣ and R₀ may use a suitable buffer size to account for the limited accuracy of the data. For instance, if the data is acquired using a Leica RTC360 terrestrial laser scanner (or a similar device) as described above, a buffer size of 1 mm may be used.

Figures 4 and 5 illustrate application examples of the parameters for surface characterization. To grade or characterize surfaces according to their accessibility quality, for instance a compound index or a 2D plot can be generated from the combination of the above parameters.

Figure 4 shows an additive score from five range-normalized parameters - e.g., an additive score from the five range-normalized roughness parameters surface median roughness (Rₘ), simulated median texture depth (SMdTD), median joint depth (Jₘ), joint-surface ratio (Jᵣ) and contact-area roughness (R₀). The theoretical value range is 0 to 5. In the shown example, the vertical scattering is random to improve readability. The analysed samples belong to one of eleven distinct pavement types. These pavement types are indicated by different grey scale values and letters A to K. The positions of the letters along the horizontal axis indicate the positions of surface type means.

To grade different surfaces by a 1D score, values for each parameter are range-normalized first. Then, for each pavement sample, the normalized parameter values are summed. If the five roughness parameters illustrated in Figures 3a to 3e are used, then the normalized parameter values are summed and the theoretical range of the score is then 0 to 5. As an example: While for asphalt pavement the score is around 0 to 0.5, it is around 1.8 to 2.8 for different types of square cobble stone pavements with solid joints. If a score between 0 and 1 is preferred instead, then the sum of the normalized parameter values needs to be divided by the number of parameters.

Figure 5 shows the result of metric Multi-dimensional Scaling (MDS) on vectors containing all range-normalized parameter values. Again, the analysed samples belong to one of eleven distinct pavement types, the letters A to K indicating the surface type. Circled Letters A to K indicate the positions of surface type means. To group and characterize different pavement samples, MDS is applied to the 1D vectors containing all five range-normalized parameter values per sample. The result of the metric MDS is plotted as output in 2D and can be interpreted by a user based on the visualization. In particular, the user may determine surface roughness of the investigated ground samples and infer surface quality with respect to functional properties based thereon, such as rolling resistance and vibrations. These properties may then be used for barrier-free routing, e.g., to determine the best routes for wheelchair travellers or strollers.

Although the invention is illustrated above, partly with reference to some preferred embodiments, it must be understood that numerous modifications and combinations of different features of the embodiments can be made. All of these modifications lie within the scope of the appended claims.

## Claims

1. Computer-implemented method (100) for characterizing a macrotexture of a ground surface, the method comprising
- receiving (110) 3D point cloud data of a scene, the scene comprising one or more ground surfaces, the 3D point cloud data comprising a plurality of ground points related to the one or more ground surfaces;
- selecting (130) a sampling unit (3) of one of the ground surfaces; and
- performing plane fitting (140) for fitting one or more planes (5), each plane representing a portion (4) of the sampling unit (3), wherein the plane fitting is based on ground points related to the portion represented by the respective plane,
**characterized by**
- calculating (150) a set of roughness indices, each roughness index characterizing the macrotexture of the sampling unit, wherein the calculation of each roughness index is based on distance values of ground points related to the respective portions, the distance values indicating a distance of the respective ground point relative to the respective plane;
- generating (160) output based on the set of roughness indices; and
- providing (170) a graphical representation of the output in a graphical user interface.

2. Method (100) according to claim 1, wherein
- the set of roughness indices comprises at least three, particularly at least five, roughness indices, and
- generating (160) the output comprises combining the values of each calculated roughness index,
in particular wherein
- the output is provided (170) as a compound index or a two-dimensional plot;
- combining the values of each roughness index comprises range-normalizing the values for each roughness index, and summing the range-normalized values, particularly wherein combining the values also comprises dividing the sum by the number of roughness indices; and/or
- generating (160) the output comprises applying metric Multi-Dimension Scaling and providing (170) the output comprises plotting the metric Multi-Dimension Scaling in two dimensions.

3. Method (100) according to claim 1 or claim 2, wherein calculating (150) the set of roughness indices is based only on distance values of ground points having a distance from the plane that is within the macrotexture realm, particularly a maximum distance of 25 millimetres.

4. Method (100) according to any one of the preceding claims, comprising a processing (120) of the 3D point cloud data before performing the plane fitting (130), wherein the processing (120) comprises at least one of
- excluding points of the 3D point cloud data that lie beyond a predefined range from a scanning device recording the respective points of the 3D point cloud data, particularly wherein the predefined range is 10 metres; and
- resampling the ground points to reduce influence of outliers, measurement errors and/or noise, particularly resampling to 10 mm average point distance.

5. Method (100) according to any one of the preceding claims, wherein the set of roughness indices comprises a surface median roughness (Rₘ), the surface median roughness being calculated (150) as the median (10) absolute deviation from the fitted plane (5).

6. Method (100) according to any one of the preceding claims, wherein the set of roughness indices comprises a simulated median texture depth (SMdTD), the simulated median texture depth being the median (20) of deviations from the 95^{th} percentile (21) of the distance values.

7. Method (100) according to any one of the preceding claims, wherein the set of roughness indices comprises a median joint depth (Jₘ), the median joint depth being calculated (150) as the median (30) of the distance values negatively deviating more than a first predefined distance (31) from the fitted plane (5).

8. Method (100) according to any one of the preceding claims, wherein the set of roughness indices comprises a joint-surface ratio (Jᵣ), the joint-surface-ratio being the proportion (40) of ground points more than a second predefined distance (41) below the fitted plane (5).

9. Method (100) according to any one of the preceding claims, comprising
- sorting the distance values into a plurality of bins,
- shifting the distance values by subtraction of the mean (50) of the most frequent bin of the plurality of bins, and
- fitting a new plane (8) using surface ground points having a shifted distance larger than a third predefined distance (51), particularly wherein the remaining points (53) are discarded,
wherein the set of roughness indices comprises a contact-area roughness (R₀), the contact-area roughness being the proportion of ground points that are not more than a fourth predefined distance (52) above or below the new plane (8).

10. Method (100) according to any one of claims 7 to 9, wherein the first, second third and/or fourth predefined distance (31, 41, 51, 52)
- is selected based on properties of the 3D point cloud data or of a device capturing the 3D point cloud data, particularly wherein the properties comprise at least an accuracy; and/or
- is in the range of 0.5 to 2.5 millimetres, particularly in the range of 0.75 to 1.25 millimetres,
particularly wherein the first, second, third and fourth predefined distances (31, 41, 51, 52) have the same value or basically the same value.

11. Method (100) according to any one of claims 5 to 10, wherein the set of roughness indices comprises at least three, in particular all, of:
- a surface median roughness (Rₘ);
- a simulated median texture depth (SMdTD);
- a median joint depth (Jₘ);
- a joint-surface ratio (Jᵣ); and
- a contact-area roughness (R₀).

12. Method (100) according to any one of the preceding claims, wherein
- a plurality of sampling units of at least one of the ground surfaces are selected (130);
- the plane fitting is performed (140) for fitting a plurality of planes and each of the selected sampling units, each plane representing a portion of the respective sampling unit;
- a set of roughness indices is calculated (150) for each of the selected sampling units; and
- output is generated (160) for each of the selected sampling units,
particularly wherein the graphical representation of the output is provided (170) in the graphical user interface assigned to a graphical representation of the respective sampling unit.

13. Method (100) according to any one of the preceding claims, wherein the distance values indicate
- a vertical distance of the respective ground point relative to the respective plane, particularly wherein the plane is horizontal or basically horizontal; or
- a distance of the respective ground point to the respective plane along an axis that is orthogonal to the plane.

14. Method (100) according to any one of the preceding claims, wherein performing the plane fitting (140) comprises using least-squares method.

15. Computer program product comprising program code having computer-executable instructions for performing the method (100) according to any one of the preceding claims.
